# EUROPÄISCHE PATENTSCHRIFT

(11) **EP 0 865 722 B1**
(45) Veröffentlichungstag und Bekanntmachung des Hinweises auf die Patenterteilung: **05.06.2002**
(21) Anmeldenummer: 98890072.6
(22) Anmeldetag: 16.03.1998
(51) Int. Cl.: A01F 15/07

(54) **Wickelmaschine zum Umwickeln quaderförmiger Gutballen mit Hüllfolien**
Wrapping machine for packaging rectangular bales of fodder in covering film
Machine pour envelopper des balles rectangulaires avec un film de couverture

(30) Priorität: 17.03.1997 AT 46397
(43) Veröffentlichungstag der Anmeldung: 23.09.1998
(73) Patentinhaber: Göweil, Herbert, 4202 Kirchschlag (AT)
(72) Erfinder: Göweil, Herbert, 4202 Kirchschlag (AT)
(74) Vertreter: Hübscher, Helmut, Dipl.-Ing.

(56) Entgegenhaltungen:
- WO-A-96/22225
- DE-A- 4 425 428
- FR-A- 2 687 040

## Beschreibung

Die Erfindung bezieht sich auf eine Wickelmaschine zum Umwickeln quaderförmiger Gutballen mit Hüllfolien od. dgl., bestehend aus einer Wälzeinrichtung zum Umwälzen der Ballen um eine im wesentlichen horizontale Wälzachse und einer Wickeleinrichtung zum Aufbringen der Hüllfolien mit einem relativ zur Wälzeinrichtung um eine Vertikalachse umlaufenden Folienabzug, wobei die Wälzeinrichtung zwei um zueinander parallele horizontale Pendelachsen schwenkbar gelagerte Pendelstützen mit in gleicher Höhe angeordneten, zwischen sich die Gutballen aufnehmenden Fördermitteln aufweist.

Mit diesen Wckelmaschinen werden beispielsweise Futterballen zum Silieren luftdicht in Folien eingehüllt, wobei es, um den Seliervorgang nicht zu gefährden, auf eine wirklich geschlossene Umhüllung mit sich überlappenden Folienbahnen ankommt. Selbstverständlich können aber auch Papierballen oder andere Gutballen mit solchen Wckelmaschinen in geeignetes Hüllmaterial eingewickelt werden. Die Ballen lassen sich dabei durch einen geeigneten Preßvorgang in einer etwa quaderförmigen Gestalt vorfertigen, welche quaderförmigen Gutballen gegenüber den zylindrischen Ballen wegen ihrer besseren Stapelbarkeit und Lagerbarkeit meist bevorzugt werden, doch stellen sie hinsichtlich des Umhüllens größere Ansprüche an die Wickelmaschinen. Zum Einhüllen werden die Ballen mit einer Wälzeinrichtung um eine Horizontalachse umgewälzt und gleichzeitig die Folienbahnen mit einem Folienabzug einer Wickeleinrichtung horizontal um die Ballen herumgewickelt, wobei der Folienabzug, aber auch die Wälzeinrichtung die Wickeldrehung ausführen kann. Zur Anpassung der Wälzeinrichtung an die sich beim Umwälzen der Ballen auf Grund der Quaderform ändernde Gestalt, weist die Wälzeinrichtung gemäß der EP 0 543 792 A zwei nebeneinander angeordnete Pendelstützen mit zwei Stützarmen zur Aufnahme jeweils eines Förderwalzenpaares auf, die sich durch die Pendelbewegungen an die Quaderseiten anlegen können und so für eine entsprechende Wälzbewegung sorgen, wobei zumindest ein Paar der Förderwalzen antreibbar sind. Gemäß der DE 44 25 428 A wurde auch schon eine Wälzeinrichtung vorgeschlagen, die aus einem zwischen zwei Förderwalzen umlaufenden Förderband besteht, wobei das Fördertrum des Förderbandes einen an die Quaderform sich anpassenden Durchhang bildet und die Förderwalzen zum Ausgleich der sich ändernden Quaderkonturen auf Pendelstützen gelagert sind. Diese Wälzeinrichtungen haben sich grundsätzlich durchaus bewährt, doch besteht durch die pendelnde Abstützung der Fördermittel die Gefahr, daß durch ein unvorhergesehenes Auswandern der Gutballen aus der Wälzmitte oder ähnliche Unregelmäßigkeiten des Wälzvorganges eine der Pendelstützen zu stark auswärts gedrückt und über ihre Totpunktlage hinaus auswärts verschwenkt wird, was zu einer Unterbrechung des Wälzvorganges und zu einem Gutballenabwurf während des Umwickelns führt und eine umständliche und zeitraubende Behebung dieser Störung erforderlich macht.

Der Erfindung liegt daher die Aufgabe zugrunde, diese Mängel zu beseitigen und eine Wickelmaschine der eingangs geschilderten Art so zu verbessem, daß sie einen ordnungsgemäßen und störungsfreien Wickelvorgang auch bei unregelmäßigen und mißgeformten Gutballen gewährleistet.

Die Erfindung löst diese Aufgabe dadurch, daß die Pendelstützen über eine Koppeleinrichtung im Sinne gegengerichteter Schwenkbewegungen miteinander gekoppelt sind. Durch diese einfache Maßnahme werden die Pendelstützen in ihren Schwenkbewegungen voneinander abhängig, so daß keine der Stützen in ihrer Schwenkbewegung ausbrechen kann, sondern sich immer eine zur Wälzmitte symmetrische Pendelstützenbewegung ergibt. Damit wird sichergestellt, daß der umgewälzte Gutballen bei Auftreten einer exzentrischen Bewegung oder eines Seitenschubes durch die gegengleichen Pendelstützenbewegungen immer wieder in seiner Wälzbewegung ausgerichtet und immer wieder neu zentriert wird und es zu keiner Wälzstörung kommt. Dabei spielt es keine Rolle, welche Fördermittel an den Pendelstützen angesetzt sind, das gegengleiche Auspendeln der Fördermittel führt stets zur gewünschten Mittenführung des umgewälzten Gutballens. Auch die Koppelung der Pendelstützen selbst kann auf jede geeignete Art Koppeleinrichtung erreicht werden, vorzugsweise durch eine mechanische Koppelstange, ein hydraulisches Gestänge oder ein Koppelungsgetriebe.

In der Zeichnung ist der Erfindungsgegenstand rein schematisch veranschaulicht, und zwar zeigen
- Fig. 1: eine erfindungsgemäße Wickelmaschine in Seitenansicht und
- Fig. 2: ein anderes Ausführungsbeispiel einer Wälzeinrichtung dieser Wickelmaschine ebenfalls in Seitenansicht.

Eine Wickelmaschine 1 zum Umwickeln quaderförmiger Gutballen B mit einer nur angedeuteten Hüllfolie F setzt sich aus einer Wälzeinrichtung 2 zum Umwälzen der Gutballen B um eine im wesentlichen horizontale Wälzachse A und einer Wickeleinrichtung 3 zum Aufbringen der Hüllfolie F zusammen. Diese Wickeleinrichtung 3 weist einen Folienabzug 4 auf, der an einem Auslegerarm 5 um eine zur Umwälzeinrichtung 2 etwa mittige Vertikalachse V dreh- und antreibbar an einem galgenförmigen Steher 6 gelagert ist und beim Umlaufen die Hüllfolie F um den Ballen wickelt. Da sich während dieses Umlaufes der Ballen gleichzeitig umwälzt, kommt es zu einem vollständigen Einhüllen des Gutballens B mit Hüllfolie F.

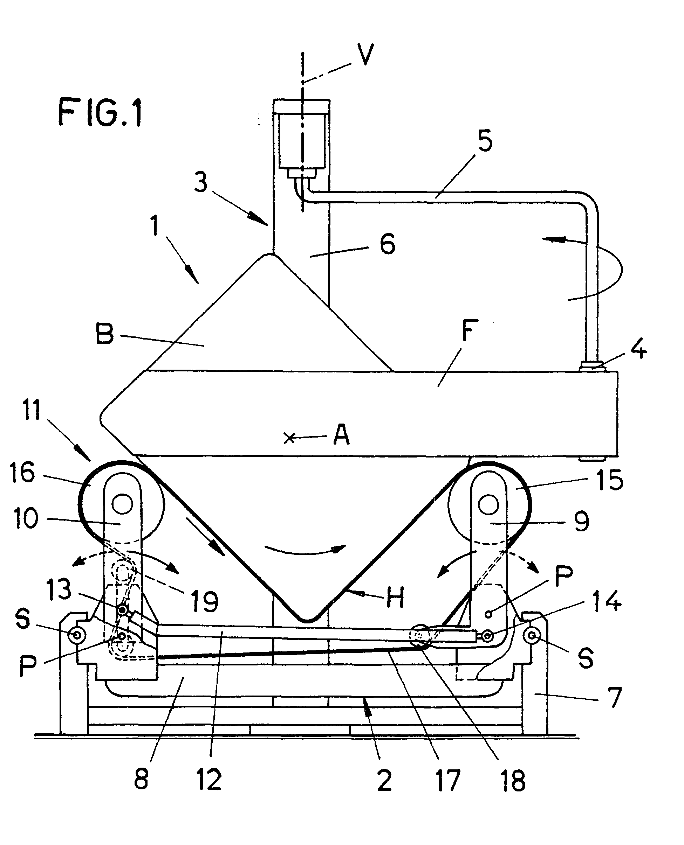

Gemäß dem Ausführungsbeispiel nach Fig. 1 besteht die Wälzeinrichtung 2 aus einem beidseits um eine horizontale Schwenkachse S an einem Maschinenrahmen 7 zum Abkippen der fertiggewickelten Gutballen B hochschwenkbar abgestützten Grundgestell 8, an dem zwei um zueinander parallele horizontale Pendelachsen P schwenkbar gelagerte Pendelstützen 9, 10 gelagert sind und in gleicher Höhe wirksame, die Gutballen B zwischen sich aufnehmende Fördermittel 11 aufweisen. Die beiden Pendelstützen 9, 10 sind über eine Koppelstange 12 im Sinne gegengerichteter Schwenkbewegungen miteinander gekoppelt, wobei die eine Anlenkstelle 13 oberhalb und die andere Anlenkstelle 14 unterhalb der zugehörenden Pendelachse P liegen. Als Fördermittel 11 sind zwei Förderwalzen 15, 16 und ein endloses Förderband 17 vorgesehen, wobei das Förderband 17 unterhalb der Förderwalzen 15, 16 über eine Rückführrolle 18 im Bereich der Pendelstütze 9 und eine Spanneinrichtung 19 im Bereich der Pendelstütze 10 umläuft und das Fördertrum des Förderbandes 17 zwischen den Förderwalzen 15, 16 einen sich an die Ballenform anschmiegenden Durchhang H bildet. Wird nun das Förderband 17 über eine der Förderwalzen angetrieben, kommt es zu einer Umwälzung des Ballens, wobei sich der den Ballen aufnehmende Durchhang entsprechend der Wälzposition des Ballens vergrößert oder kleinert. Die Bewegungskoppelung der Pendelstützen 9, 10 gewährleistet aber, daß die Form des Durchhanges bzw. die Pendelbewegung der Pendelstützen symmetrisch zur Wälzmitte erfolgen und damit eine Zentrierung der Ballenbewegung während des Umwälzens erfolgt.

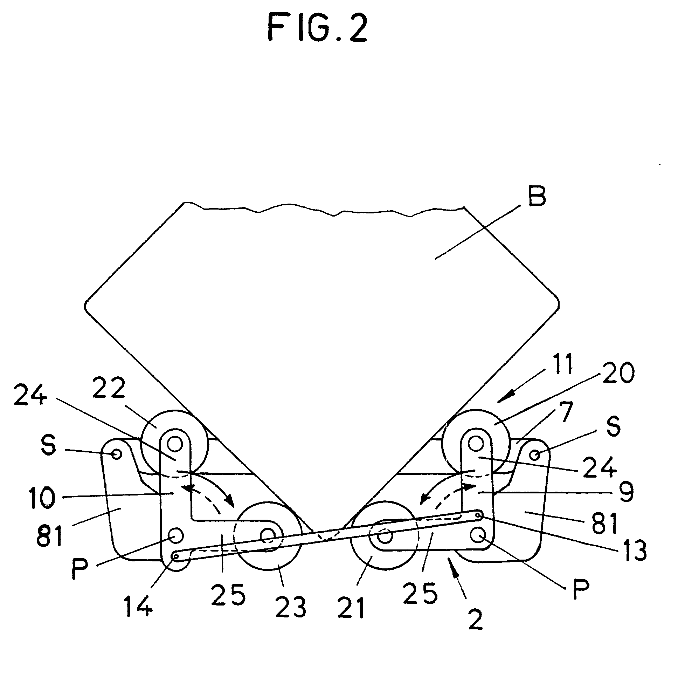

Gemäß dem Ausführungsbeispiel nach Fig. 2 gibt es zwei um horizontale Schwenkachsen S schwenkbar an zangenartigen Trägem 81 des Maschinenrahmens 7 angelenkte Pendelstützen 9, 10 und als Fördermittel 11 sind an jeder Pendelstütze 9, 10 ein Paar Förderwalzen 20, 21, 22, 23 vorgesehen, zu deren Lagerung die Pendelstützen 9, 10 zwei zueinander abgewinkelte Stützarme 24, 25 aufweisen. Die Koppelstange 12 verbindet die Pendelstützen 9, 10 ebenfalls im Sinne einer gegengleichen Schwenkbewegung und auch hier liegt die eine Anlenkstelle 13 oberhalb und die andere Anlenkstelle 14 unterhalb der zugehörigen Pendelachse P. Zum Umwälzen des Gutballens B werden die Förderwalzen einer Pendelstütze angetrieben, so daß die zwischen den Förderwalzenpaaren abgestützten Ballen durch die an den Ballenseiten abrollenden Förderwalzen bewegt und auch rundum geführt und umgelenkt werden. Durch die gegengleiche Schwenkbewegung der Pendelstützen über die Förderwalzenpaare wird wiederum ein zentrierender Einfluß auf den sich umwälzenden Gutballen B ausgeübt und so für ein störungsfreies Umwälzen und damit ein einwandfreies Folienumwickeln des Ballens gesorgt.

## Patentansprüche

1. Wickelmaschine (1) zum Umwickeln quaderförmiger Gutballen (B) mit Hüllfolien (F) od. dgl., bestehend aus einer Wälzeinrichtung (2) zum Umwälzen der Ballen (B) um eine im wesentlichen horizontale Wälzachse (A) und einer Wckeleinrichtung (3) zum Aufbringen der Hüllfolien (F) mit einem relativ zur Wälzeinrichtung um eine Vertikalachse (V) umlaufenden Folienabzug (4), wobei die Wälzeinrichtung (2) zwei um zueinander parallele horizontale Pendelachsen (P) schwenkbar gelagerte Pendelstützen (9, 10) mit in gleicher Höhe angeordneten, zwischen sich die Gutballen (B) aufnehmenden Fördermitteln (11) aufweist, **dadurch gekennzeichnet, daß** die Pendelstützen (9, 10) über eine Koppeleinrichtung (12) im Sinne gegengerichteter Schwenkbewegungen miteinander gekoppelt sind.

## Claims

1. A machine (1) for wrapping cuboidal bales (B) of material in sheeting (F) or the like, the machine comprising a rolling means (2) for rolling the bales (B) around a substantially horizontal axis (A) and a wrapping means (3) for supplying the sheeting (F) and comprising a sheet withdrawal means (4) rotating around a vertical axis (V) relative to the rolling means, wherein the rolling means (2) has two articulated supports (9, 10) mounted for pivoting around parallel horizontal axes (P) and with conveying means (11) disposed at the same height and receiving the bales (B) between them, **characterised in that** the supports (9, 10) are coupled together by a coupling means (12) so as to pivot in opposite directions.

## Revendications

1. Machine d'enroulement (1) pour enrouler des balles de produit (B) à forme parallélépipédique, avec une feuille de gainage (F) ou analogue, constituée d'un dispositif de mise en rotation (2) pour faire rouler les balles (B) autour d'un axe de roulement (A) sensiblement horizontal, et d'un dispositif d'enroulement (3) pour appliquer les feuilles de gainage (F), avec un dispositif d'extraction de feuille (4) qui tourne par rapport au dispositif de mise en rotation, autour d'un axe vertical (V), le dispositif de mise en rotation (2) présentant deux appuis pendulaires (9, 10) montés à pivotement autour d'axes d'oscillation pendulaire (P) horizontaux, parallèles entre eux, avec des moyens de transport (11) disposés au même niveau, supportant entre eux les balles de produit (B), **caractérisé en ce que** les appuis pendulaires (9, 10) sont couplés ensemble pour effectuer chacun un mouvement pivotant orienté en sens inverse de l'autre, par l'intermédiaire d'un embiellage de couplage (12).
